# EUROPEAN PATENT APPLICATION

(11) **EP 1 619 853 A1**
(43) Date of publication of application: **25.01.2006**
(21) Application number: 04425545.3
(22) Date of filing: 21.07.2004
(51) Int. Cl.: H04L 29/06, H04Q 7/24

(54) **RTSP proxy extended to detect streaming session events and report to valued streaming applications the notified ones**

(71) Applicant: Siemens Mobile Communications S.p.A., 20126 Milano (IT)
(72) Inventor: De Zen, Giovanna, 31011 Asolo (TV) (IT); Pavarani, Giovanna, 25020 Poncarale (IT)
(74) Representative: Giustini, Delio

(57) **Abstract**

An Extended RTSP Proxy interworks with an IP Application Server to offer valued multimedia streaming services to the subscribers. The Extended RTSP Proxy comprises a RTSP Proxy modified to further interface a Streaming Service Extension Module (SSEM). The Extended RTSP Proxy acts as intermediary between the client Requests and the relative Responses from one or more Video Servers. The SSEM module is responsible for monitoring the RTSP sessions originated by subscribers on the basis of instructions provided by the applications by proper Java APIs based on RMI (Remote Method Invocation) at the application interfaces. For this aim it deploys multiple instantiations of a state machine to detect event type session state change on behalf of each session addressed by a combination of a valid subscriber identifier and the identifier of the application invoked by the client. A personalized RTSP URL clickable on the Web is transferred inside the DESCRIBE and SETUP messages to provide the SSEM module with this information. Operatively, the SSEM module is piggyback the RTSP proxy to infer events type session state change from observations of the crossing signalling. The detected events are compared to registered notification lists of events transmitted by the Applications running inside the Application Server. In case of matching an event is reported back to the requesting application. The Extended RTSP Proxy uses TCP as reliable transport protocol for RTSP packets, and UDP to transport the RTP/RTCP streaming data/control packets. Additional TCP ports are foreseen at the interface with the SSEM module. In a preferred embodiment valid for the IMS platform, the SSEM module can be located inside the Application Server. In such a case the personalized RTSP URL includes the SIP address of the client. When the applications are running inside Application Server outside the IMS domain, valid PLMN subscriber identifiers could be the MSISDN numbers of the subscriber (fig.5).

## Description

### FIELD OF THE INVENTION

The present invention relates to the field of delivering multimedia streaming services via IP, and more precisely to a RTSP proxy extended to detect streaming session events and report all or a subset of them to valued streaming applications which requested to be notified. As it will be clear from the description and the preamble of claim 1, the invention can be used both in the mobile and fixed communication networks. Concerning the mobile case, two opportunities are open:
- Multimedia streaming services are delivered to the end users/subscribers through the IMS platform, appositely standardized to offer IP services inside a PLMN. In such a case the extended RTSP proxy is connected to the IMS platform, or even partially rather than completely included inside it. Adopting the IMS core network the role of PLMN provider and IP service provider can advantageously coincide.
- IMS is not implemented and the RTSP proxy is connected to either PLMN internal or external application servers which enable the provision of Multimedia streaming services.

Without limitation, the disclosure of a preferred exemplary embodiment of the invention addresses the only IMS implementation.
Used acronyms and bibliographic references are given at the end of the description.

### BACKGROUND ART

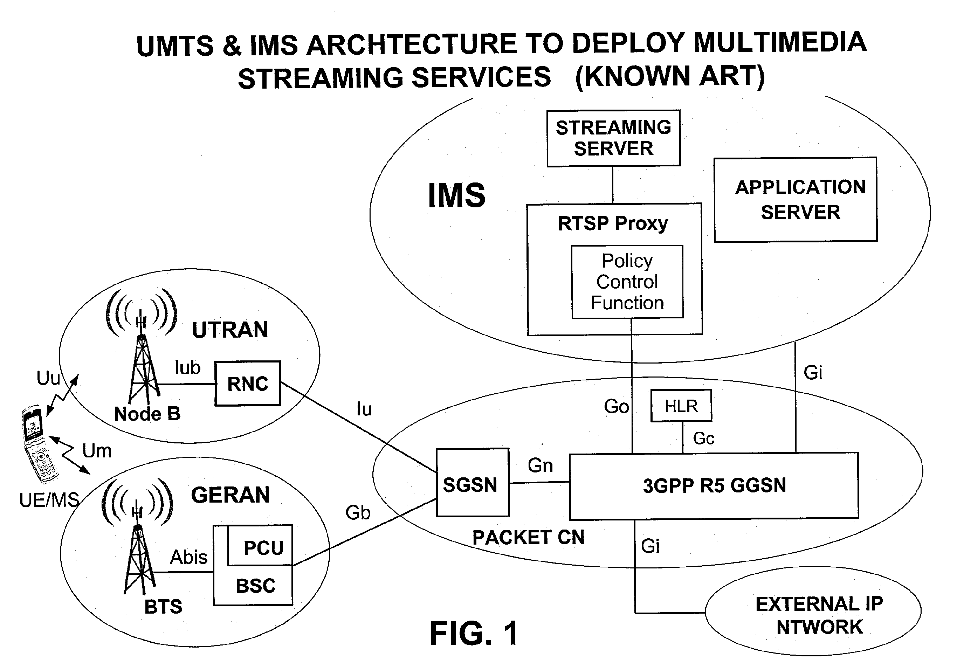

The article of Héctor Montes et al. (NOKIA) and Jose F. Paris (University of Malaga), titled: "DEPLOYMENT OF IP MULTIMEDIA STREAMING SERVICES IN THIRD-GENERATION MOBILE NETWORKS", IEEE Wireless Communications, October 2002, in the present knowledge of the Applicant could be considered as a relevant prior art to the preferred embodiment of the invention inside the IMS platform. This article magisterially describes an end-to-end quality of services (QoS) framework for streaming IP services in 3G mobile networks through the IMS. Under this scenario the interaction between UMTS and IETF's protocols and mechanisms for a streaming session are analyzed. By signalling flowcharts, it is shown that both groups of protocols and mechanisms can co-operate to provide seamless end-to-end real-time services. Specifically, the article proposes to make the IMS aware of the RTSP, in order to extend its control from SIP to RTSP-based services, such as multimedia streaming services. **Fig.1,** extracted from this article, shows a simplified IMS-UMTS network architecture. The IM subsystem constitutes a part of the Release 5 Core Network infrastructure of PLMN, which is divided into a CS domain, a PS domain and an IM subsystem.

With reference to **fig.1,** the PLMN includes both UTRAN and GERAN access parts connected to the Packet core network (CN), in its turn connected to the IMS. UE/MS handset is connected via radio to Node B / BTS inside UTRAN/GERAN through the Uu/Um interface. Node B / BTS is connected to RNC/BSC through the lub/Abis interface. Both RNC and BSC are connected to SGSN inside the CN, the first through the lu interface while the second through the Gb. The simplified packet CN includes SGSN, GGSN, and HLR. The GGSN is connected: to SGSN through the Gn interface, to HLR through the Gc interface, to the IMS and an external IP network through the Gi interfaces. The IMS includes: an Application Server, a Multimedia streaming Server, and a RTSP Proxy which includes a Policy Control Function (PCF). These IMS elements represented in fig.1 are only a minimal part of the real ones, limitedly to the only needs of the article.

The Multimedia streaming Server is connected to RTSP Proxy and the PCF block is connected to GGSN through the Go interface. In operation:
- The SGSN node serves the UE/MS and supports GPRS for GSM and/or UMTS.
- The HLR register contains packet domain subscription data and routing information.
- The GGSN node is the first point of PDN interconnection with an UMTS and GSM PLMN supporting GPRS.
- The IMS platform offers to the operators, service providers, and clients, the sort of service capabilities that IP is designed to provide. These include access to Internet and multimedia content. IMS will use the emerging IP version 6 (IPv6), considered by many to be substantially superior to the current, widely deployed version 4 (IPv4). The IM subsystem has as its primary focus to provide the users/clients the ability to join multimedia session in which they are allowed to send and receive data communications even when roaming. The IMS signalling uses a SIP application-layer control protocol for creating, modifying and terminating sessions with one or more participants and the service provisioning on mobile networks. These sessions include Internet multimedia conferences, Internet telephone calls, presence service and multimedia distribution. SIP supports user mobility by proxying and redirecting requests to the user's current location.
- The RTSP Proxy uses the RTSP protocol to control the delivery of real-time streaming data. RTSP is a client-server protocol specified at application level; it avails of RTP/RTCP to establish and control streams of continuous media.
- The PCF collocated within the RTSP Proxy is the entity charged of the IP Bearer Service (BS) policy management in the interworking with GGSN. The GGSN and PCF make use of the COPS protocol to interact on the Go interface and negotiate the IP BS according to **[3GPP_E2EQoS].** Policies represent established service level agreements (SLAs) between service providers and users. SLAs specify a set of agreed rules for performing admission control that are base not only on the availability of the requested resources but also on accessibility, security, and other network performance issues expected by the UE.
- The Application Server is able to deploy, together with the RTSP proxy, enhanced network services such as SIP-based voice over IP and data multimedia services. A specific role of the Application Server with respect to the streaming is not highlighted in the article.

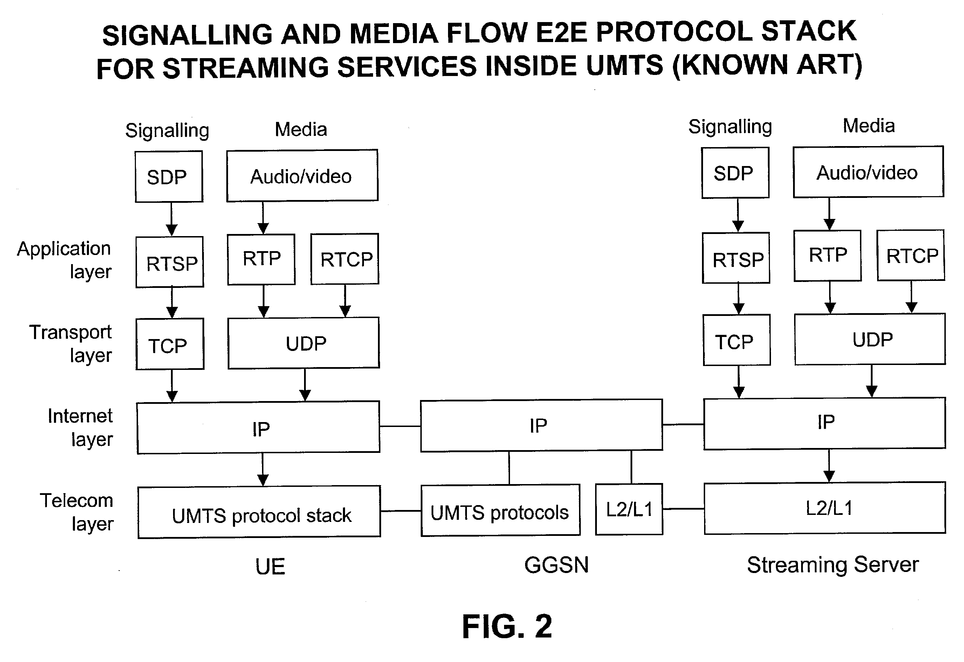

**Fig.2,** further extracted from the cited article and self-explanatory, shows the various stacks of the aforementioned protocols for signalling and media flows at the interfaces between the main network elements involved with streaming sessions, namely: the UE, the GGSN, and the Streaming Server which is addressed by the RTSP proxy.

Due to the importance that RTSP protocol assumes in the subjected invention, some other relevant details are given. The RTSP protocol is intentionally similar in syntax and operation to HTTP/1.1, thereafter is an extensible, text based, protocol easily parsed by HTTP and MIME parsers. However RTSP is not a stateless protocol, but instead it maintains track of every streaming session. Other differences lies in the definition of different methods (e.g. SETUP, PLAY, RECORD, PAUSE, TEARDOWN,...), the usage of a different protocol for media delivery, and the possibility for both the client and the server to issue requests. RTSP, being a http friendly protocol, reuses all the authentication and network layer security mechanisms, and is easily handled by proxies and firewalls. The protocol may also specify different modes of operation such as: unicast and multicast (with both server and client chosen addresses).

### TECHNICAL PROBLEM TO BE SOLVED

The proposal of the aforementioned article is that to extend to RTSP protocol the streaming service session control exerted by IMS and traditionally based on SIP protocol. The solution of including streaming as one service in the IMS avoids accessing streaming service through an external IP-PDN, so as it avoids of adding specific method to SIP, e.g.: PLAY and STOP. With this solution the mobile operator hosts a streaming server or proxy server within the PLMN, allowing the operator to provide sufficient QoS to users of wireless streaming terminals. However, there are other streaming servers outside the IMS that still use the industry standard RTSP. Without ad-hoc solutions, the PCF for these servers should rely upon SIP-based session control information. In fact, PCF is standardized as a logical part of the proxy call state control function (P-CSCF) inside the IMS. The solution proposed in the article is to deploy inside the IMS a RTSP proxy server with embedded the PCF functionality, in order to make the PCF also aware of RTSP methods other than the SIP ones. This proposal is mainly devoted to reach some end-to-end QoS expectations in the task of streaming out real-time IP multimedia contents towards end users of the UMTS networks. Despite the undoubted advantages on the QoS policy, this approach seems quite rigid anyway to face some emerging expectations to provide applications appositely cut out on streaming services, to say, applications which need a sort of synchronization among all the various media players the media service is streamed to. Large expansion of these applications is foreseeable in the next future due to the convergence of two factors, namely, increased opportunities offered by the wider UMTS channel band and the strong competition among service providers. In this optic, the ability to introduce solutions on the market which enable the service providers to design applications appositely cut out on streaming services should be a considerable advantage towards the competitors. Shared view among a group of participants which agree to do it is an example of valued streaming service. A lot of applications can be thought, e.g.: Olympic games (finals reviewing); introductory arguments to a medical symposium (video clips of a surgical operation); preview of destination landscapes before booking for a touring; etc. These examples are emblematic of possible different tasks the applications are called for. In all the above cases a first application might be devoted to obtain a charge discount due to the increased consume, while in the second and third cases another application may send back a courtesy advice to all participants when also the last viewer has completed enjoying the service. Users might prefer unicast shared view rather than multicast, because in the first case they are put in the position to catch the live opportunities offered browsing the web, instead of subscribing from a multicast bouquet. Besides, the shared sessions are not tightly synchronized as in multicast and each participant may receive the service at its own discretion before a time window is lapsed. The more freedom allowed with unicast shared view has in return that applications must be informed real-time on the main events just happened in a streaming session, in order to trigger their owns tasks. Standard RTSP is a client/server end-to-end protocol designed to control a multimedia streaming server, but there are not provisions to communicate the internal protocol state to the applications. The same intrinsic protocol limitations are reflected on the RTSP proxy of the cited article.

Other limitations arise in the following use cases due to the just mentioned cause: Streaming session authorization by IMS domain; IMS flexible charging of streaming sessions; and Peer-to-peer and streaming service bundles.

In the first use case the Mobile Network Operator (MNO) can enforce its policy on the validity of a streaming content by applying an authorization check to each streaming request. Current solution to streaming request authorization is the introduction of ad hoc plug-in modules which are dependent on the streaming platform technology and on the MNO mobile environment (e.g.: QuikTime, Real, etc.). Drawbacks of the current solution are: a) lack of a commonality and interoperability; b) need for as many ad hoc plug-in modules as the number of streaming platforms; need for ad hoc application server that implement the policy.

In the second use case (flexible charging) the charging is time-dependent, to say: streaming in busy hours costs more while streaming at night costs less. Streaming sessions are typically charged to the user who get the streaming content but exceptions need to be managed, for example: free view for advertising; corporate streaming services; charging to third parties. Current solution to third party charging is typically Web based: the third party selects the content to be streamed and the recipient who is then notified of the gift via WAP push or MMS. Drawbacks of current solution are: the third party is charged even when the recipient does not get the content; the third party does not know neither if nor when the recipient get the content; no general mechanism, no APIs.

In the third use case (service bundles) streaming can be used as a basic service to provide more complex applications (bundles). To this aim, IMS enables the provision of new services which are characterised by new interaction models like peer-to-peer plus streaming, for example:
- Streaming of a content and discussion among friends.
- Corporate applications: technical assistance, support.
- Health care applications: consulting.

Control of streaming session status is required at Application level. Currently, complex services can include streaming but the service logic in the network has no direct control on streaming sessions. The current bundled service has the following limitations:
- It is not possible to know "in real time" if users have received the stream.
- It is not possible to know when a user has started/paused/closed the streaming session.
- It is not possible to synchronise the service related events (e.g. chat after streaming).

### OBJECT OF THE INVENTION

The object of the present invention is that to overcome the limitations of the prior art arising when the streaming applications shall be cut out on events tied to streaming sessions. Despite the fact that major drawbacks have been highlighted for the only RTSP streaming applications inside IMS domain, these drawbacks are reasonably extendible to the case of RTSP streaming applications outside IMS domain, i.e. classical streaming applications offered today to PLMN subscribers or to Internet/PSTN users. In fact, the intrinsic causes of these drawbacks are the same for all the above cases.

Other object of the invention is that to provide a link between the RTSP methods and the valued streaming application needs.

### SUMMARY AND ADVANTAGES OF THE INVENTION

The invention achieves its first object by providing an extended RTSP proxy, as disclosed in the proxy claims.

The invention achieves its second object by providing a Method of interworking via IP connections between a RTSP proxy and streaming applications running inside an Application Server, as disclosed in the method claims.

According to the proxy claims, the Extended RTSP Proxy includes an RTSP Proxy which is modified to redirect the RTSP signalling outgoing the client and the Video Server towards a Streaming Service Extension Module (SSEM). The SSEM module acts on the received RTSP messages upon two almost independent guidelines; namely:
- it redirects towards their original destinations the incoming RTSP signalling after having updated the reference ports;
- it is responsible for monitoring the RTSP sessions originated by the users on the basis of instructions provided by the applications by proper Java APIs. For this purpose multiple instantiations of a state machine is deployed inside the extension module to detect session state change from the incoming RTSP signalling. The multiple instances are addressed by every combination of a valid subscriber identifier and the identifier of a target application invoked by the client.

Advantageously, a personalized RTSP URL including both the aforementioned pieces-of-information is included in the two initial RTSP request messages DESCRIBE and SETUP. In case the invention is implemented inside the IMS, the personalized RTSP URL includes the SIP address of the client as valid identifier. Whether the IMS is not considered, the personalized RTSP URL may include, for example, the MSISDN of the client as valid identifier. Such personalized RTSP URL for the scope of the invention seems not presently disclosed in the art. The pieces-of-information composing the personalized URL are captured by the Web Server (which might be inside the Application Server) each time a wireless client which is browsing on the portal of its MNO clicks on the URL of a desired valued application. The Web Server will return to the user a Web page containing such personalized RTSP URLs which contain both the user identity and the application identity and optionally other application specific information. When the user will click on the selected personalized RTSP link, the RTSP request issued by the player will include the above identified information. These performances are possible without modifying the existing apparatuses of the client player and the media server, so that the end user may indirectly realize the presence of the invention by only browsing on new opportunities added to the streaming services.

From the above considerations it descends that other objects of the invention are two RTSP request messages including said personalized RTSP URL, issued by the client to initiate a streaming session, as disclosed in the message claims.

The modified RTSP proxy uses TCP as reliable transport protocol for all request and response signalling messages, and UDP as transport protocol for the RTP/RTCP streaming contents. Information about RTSP ports and data flows are added in the RTSP messages exchanged at the interface with the SSEM module, in order to convey/extract all information relevant to the correct proxying of the RTSP messages. Such a behaviour has not been noticed in any commercial RTSP proxies.

In a first preferred embodiment of extended RTSP proxy invention the SSEM module is an ad hoc extension application running inside the Application Server of the IMS platform; it is responsible for monitoring relevant streaming events and for providing streaming session related information to the valued applications. In a second preferred embodiment of extended RTSP proxy invention, more suitable to be independent of the IMS platform, both the modified RTSP Proxy and the SSEM module are included inside the same server.

The following considerations are worthy of attention:
- The SSEM module remains conceptually part of the extended RTSP proxy also in the first preferred embodiment of the invention. In fact, the SSEM core, to say, the multiple instances of a finite state machine, operates with the RTSP methods. From the operational point of view, the allocation of the SSEM module on a different server seems more appropriate because this module is only involved with low bit rate signalling, while the remaining part of the extended RTSP proxy also acts on RTP streaming fluxes at higher bit rate, hence the two servers have different performance requirements.
- The notification means includes interfaces from/to target applications based on Java RMI (Remote Method Invocation) normally implemented in the existing SIP application servers. This choice is found on consideration that trigger events from SSEM module are mostly based on RTSP messages, so as even they are non-SIP triggers as the RMI ones.

The advantages of the proposed invention mainly descend from the new opportunity offered to the IMS operators to design applications based on events detected in correspondence of media streaming service sessions. More particularly, in the aforementioned use cases of:
- Streaming session authorization by IMS domain:
   - thanks to the proposed architecture which enables an application dependent authorization policy, the old ad hoc plug-in modules and ad-hoc application servers are unneeded.
- IMS flexible charging of streaming sessions: the limitations of the charging function due to its unawareness on the fact the recipient get the content are overtaken. In fact, thanks to the new architecture:
   - IMS applications running in the application server can provide the IMS module named "Service Data Flow Based Charging Rules Function" with information for on-line / off-line charging received from the SSEM module;
   - Application dependent charging rules can be applied.
- Peer-to-peer and streaming bundles: the limitations due to the impossibility to know the states of the streaming session and hence synchronize the components of the complex service to each other, are overtaken by the new architecture.

In addition to the listed advantages peculiar of the present invention there is the one already mentioned in the cited article, which consists in the opportunity to extend the IMS control to the QoS policy on all the multimedia streaming sessions.

### BRIEF DESCRIPTION OF THE DRAWINGS

The features of the present invention which are considered to be novel are set forth with particularity in the appended claims. The invention and its advantages may be understood with reference to the following detailed description of an embodiment thereof taken in conjunction with the accompanying drawings given for purely non-limiting explanatory purposes and wherein:
- **fig.1,** already described, depicts an UMTS & IMS architecture to deploy multimedia streaming services according to the known art;
- **fig.2,** already described, shows an end-to-end protocol stack used by the architecture of fig.1 for giving support to signalling and media streaming service transmissions;
- **fig.3** depicts an UMTS & IMS architecture to deploy multimedia streaming services according to present invention;
- **fig.4** shows a typical RTSP message sequence chart relevant to a multimedia streaming service session through the protocol stack of fig.2;
- **fig.5** depicts a subset of the architecture of fig.3 including a block named EXTENDED RTSP PROXY corresponding to a first preferred embodiment of the present invention (it should be noted that streaming players, configured to proxy streaming requests to a RTSP Proxy, expect that the requested stream (RTP flow) is sent by the same proxy acting as Streaming Server);
- **fig.6** depicts a slightly different architecture with respect to the one of fig.5 corresponding to a second preferred embodiment of the present invention;
- **fig.7** depicts a diagrammatical block representation highlighting all protocol ports and directional interconnections supported by a Modified RTSP proxy which is part of the architectural subset of the figures 5 and 6;
- **fig.8** depicts a diagrammatical block representation extending the representation of fig.7 to include Java RMI API from/to target applications;
- **fig.9** depicts a message sequence chart of a typical streaming service session through the Extended RTSP Proxy of fig.7 and 8;
- **fig.10** depicts a detailed block representation of a Streaming Session Extension Module (SSEM) indicated in the previous figures from 4 to 9;
- **fig.11** shows an RTSP finite state diagram implemented by a corresponding machine inside the SSEM functional block.

### DETAILED DESCRIPTION OF A PREFERRED EMBODIMENT OF THE INVENTION

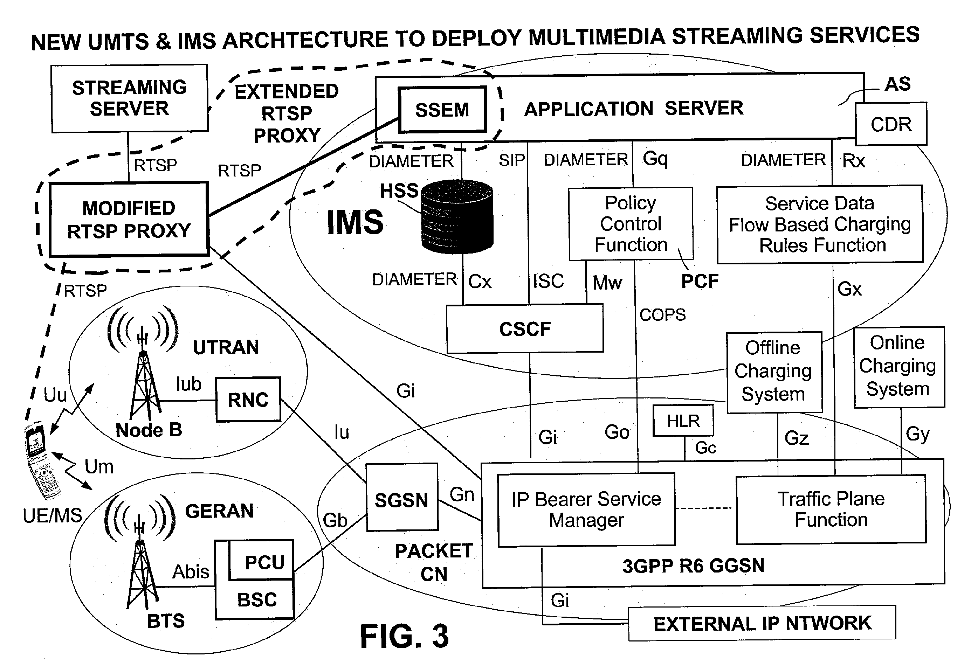

**Fig.3** outlines the high level functional architecture of an UMTS & IMS network including a preferred embodiment of the present invention. The configuration **of fig.3** is a "Logical Model" introduced to define an abstract view of a network by means of information objects representing network elements, aggregations of network elements, the topological relationship between the elements, endpoints of connections (termination points), and transport entities (such as connections) that transport information between two or more termination points. The information objects defined in the Logical Model are used, among others, by connection management functions. In this way a physical implementation independent management is achieved. A Network Element is defined as a discrete telecommunications entity which can be managed over a specific interface. The functional architecture of **fig.3** differs from the one of **fig.1,** other than more detailed IMS part and GGSN block, by the presence of two new functional blocks, namely: MODIFIED RTSP PROXY and SSEM (Streaming Service Extension Module) both included in a EXTENDED RTSP PROXY indicated with a thick dashed border line.

With reference to **fig.3,** the more detailed IMS representation includes the following functional blocks: CSCF, PCF, HSS, AS, CDR, and "Service Data Flow Based Charging Rules Function". The following standard reference points (interfaces): Cx, Sc, Mw, Gi, Go, Gq, Gx, and Rx are specified between the various blocks, as indicated in the figure. The application server AS include the SSEM block. Differently from fig.1, a 3GPP Release 6 GGSN block is visible in the packet Core Network, it includes two blocks named: "IP Bearer Service Manager" and "Traffic Plane Function" interfaced to: SGSN, HLR , EXTENDED RTSP PROXY, IMS, and an external IP network as indicated in figure. Some protocols are indicated along associated reference points, namely: COPS **[RFC2748]** on the interface Go between GGSN and PCF; DIAMETER **[RFC3588]** on the interfaces Cx, Gq, and RX; SIP on the interface ISC between CSCF and AS; and RTSP on the non-standardized interface between the RTSP proxy and SSEM block.

In operation, the IMS refers to the set of CN entities using the service provided by the PS domain to offer multimedia services. Detailed descriptions of the entities, interfaces, and protocols in UMTS are given in **[3GPP_GPRS].** The reference architecture for IMS subsystem can be found in **[3GPP_NetArch]** while more exhaustive description of the involved entities can be found in **[3GPP_IMS].** The SIP protocol used inside IMS is described in **[RFC3261]** and **[3GPP_ServReq].** The MODIFIED RTSP PROXY includes all the features of a normal RTSP PROXY plus some others expressly requested to interface the SSEM block. The MODIFIED RTSP PROXY uses the RTSP protocol **[RFC2326]** to control streaming data in real-time. The RTSP protocol avails of RTP/RTCP **[RFC3550]** to establish and control streams of continuous media. A session description protocol (SDP) **[RFC2327]** defines the set of controlled media streams, including information on the media encoding and port numbers used for the media streams, each flow being identified by an uniform resource locator (URL). This URL points to the media server that is responsible for handling a particular media stream. The description also enumerates which transport methods the server is capable of: normally RTSP is sent over TCP **[RFC0793]** and media streams use UDP **[RFC0768].** More details on RTSP will be given in the description.

The CSCF element can act in the following three ways: Proxy-CSCF, Interrogating-CSCF, and Serving-CSCF. The HSS is a database which contains IMS subscriber-related information. This database includes data for: Identification; authorized services; subscribed services. The AS block is a SIP Application Server able to offer three APIs:
- Java programming language (JPL) API;
- Call processing language (CPL) API;
- Hypertext transport protocol (HTTP) API.

Besides, it generates the CDR and includes the SSEM module. Except for the Extended RTSP Proxy, all other blocks are detailed in the cited 3GPP Technical Specifications Release 6. In the continuation it is assumed that the UE/MS, GGSN, and Video Server are capable to run all protocols indicated on the respective stacks **of fig.2.** The description of the Extended RTSP Proxy with its internal blocks is done in the successive figures with progressively increasing details.

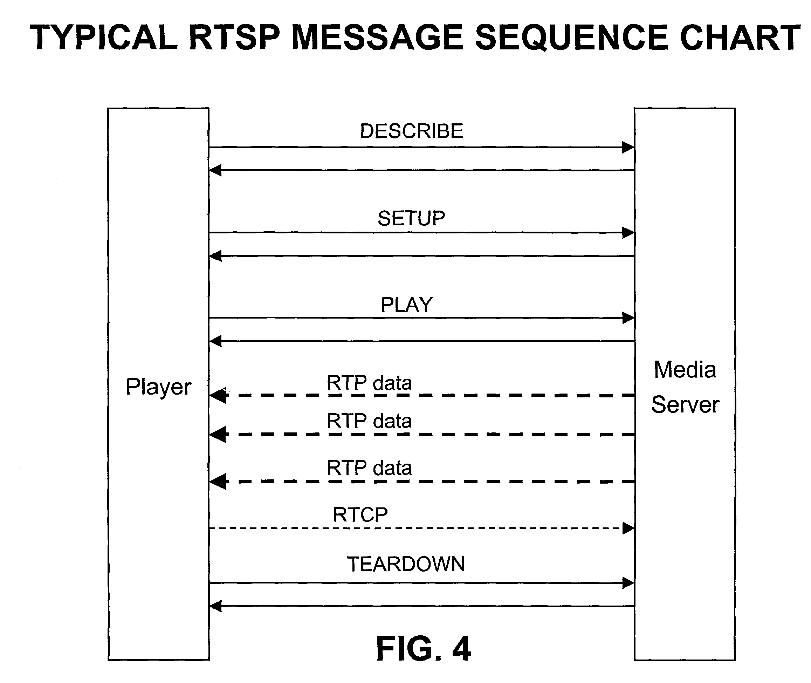

**Fig.4** shows a typical RTSP message sequence chart relevant to a multimedia streaming service session between a Media player and a Media Server. For each RTSP message sent by the Player a response follows from the Media server. With reference to **fig.4,** major RTSP methods are:
- SETUP: the server allocates resources for a stream and starts an RTSP session. A client can issue a SETUP request for a stream that is already playing to change transport parameters, which a server may allow. The Transport header specifies the transport parameters acceptable to the client for data transmission; the response will contain the transport parameters selected by the server.
- PLAY: tells the server to start sending data via the mechanism specified in SETUP. A client must not issue a PLAY request until any outstanding SETUP requests have been acknowledged as successful. The PLAY request positions the normal play time to the beginning of the range specified and delivers stream data until the end of the range is reached.
- PAUSE: causes the stream delivery to be interrupted (halted) temporarily. If the request URL names a stream, only playback and recording of that stream is halted. For example, for audio, this is equivalent to muting. If the request URL names a presentation or group of streams, delivery of all currently active streams within the presentation or group is halted. After resuming playback or recording, synchronization of the tracks must be maintained. Any server resources are kept, though servers may close the session and free resources after being paused for the duration specified with the timeout parameter of the Session header in the SETUP message.
- TEARDOWN: stops the stream delivery for the given URI, freeing the resources associated with it. If the URI is the presentation URI for this presentation, any RTSP session identifier associated with the session is no longer valid. Unless all transport parameters are defined by the session description, a SETUP request has to be issued before the session can be played again.

Additional methods are:
- OPTIONS: gets available methods. An OPTIONS request may be issued at any time, e.g., if the client is about to try a non-standard request. It does not influence server state.
- ANNOUNCE: this method serves two purposes: When sent from client to server, ANNOUNCE posts the description of a presentation or media object identified by the request URL to a server. When sent from server to client, ANNOUNCE updates the session description in real-time.
- DESCRIBE: retrieves the low level description of a presentation or media object identified by the request URL from a server. It may use the "Accept header" to specify the description formats that the client understands. The server responds with a description of the requested resource. The Session Description Protocol **[RFC2327]** may be used to describe streams or presentations in RTSP. The DESCRIBE reply-response pair constitutes the media initialization phase of RTSP. The DESCRIBE response must contain all media initialization information for the resource(s) that it describes. Media initialization is a requirement for any RTSP-based system, but the RTSP specification does not dictate that this must be done via the DESCRIBE method. There are three ways that an RTSP client may receive initialization information: a) via RTSP's DESCRIBE method; b) via some other protocol (HTTP, email attachment, etc.); c) via the command line or standard input. If a media client obtains a presentation description from a source other than DESCRIBE and that description contains a complete set of media initialization parameters, the client should use those parameters and not then request a description for the same media via RTSP.
- RECORD: initiates recording a range of media data according to the presentation description. The timestamp reflects start and end time (UTC). If no time range is given, use the start or end time provided in the presentation description. If the session has already started, commence recording immediately.
- REDIRECT: informs the client that it must connect to another server location. It contains the mandatory header Location, which indicates that the client should issue requests for that URL. It may contain the parameter Range, which indicates when the redirection takes effect. If the client wants to continue to send or receive media for this URI, the client MUST issue a TEARDOWN request for the current session and a SETUP for the new session at the designated host.
- SET_PARAMETER: requests to set the value of a parameter for a presentation or stream specified by the URI.

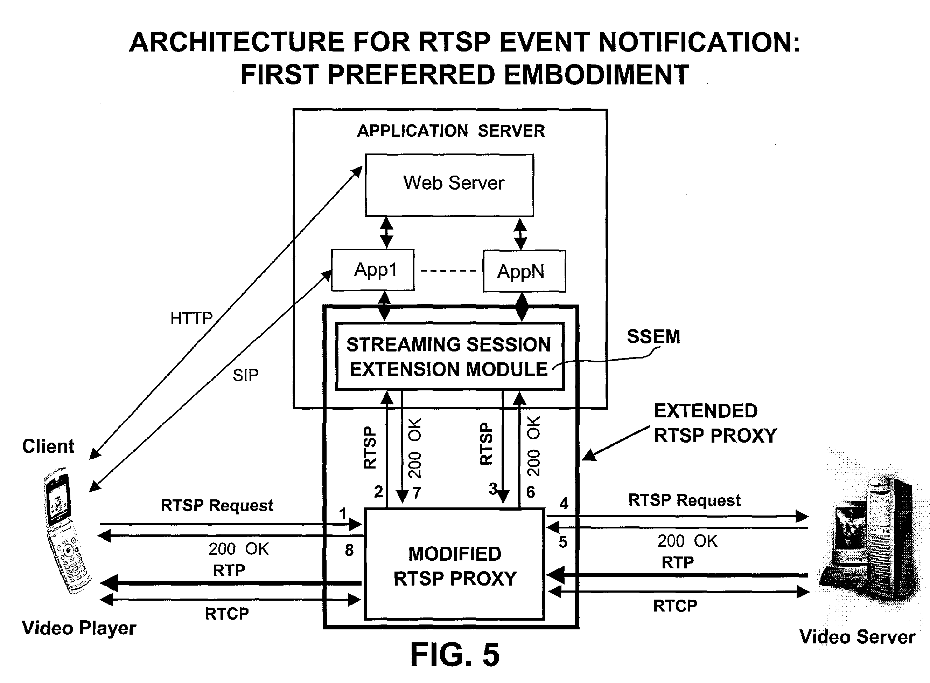

In **fig.5** a preferred embodiment of the present invention is depicted. The figure shows the Extended RTSP proxy which includes the Modified RTSP Proxy and the SSEM block. The Modified RTSP Proxy is interfaced to: the video player application inside the UE/MS, a Video Server (the Streaming Server), and to the SSEM module. The latter is included into the Application Server according to a first preferred embodiment of the invention. Inside the Application Server the SSEM module is interfaced to some applications App1, ...., AppN, which are interfaced in their turn to a Web Server inside or outside the Application Server (AS). The Client player and Web Server communicate via the protocol stack of **fig.2**. More in particular, the Client player controls the transmissions of the RTP/RTCP streaming media from the Video Server through RTSP protocol messages exchanged between the player and the Modified RTSP proxy and between the latter and the Video Server. The RTSP transmissions between: Client, Modified RTSP Proxy, SSEM, and Video Server, and vice versa, are indicated by arrows numbered from 1 to 8 according to the temporal sequence of the associated messages. Thick arrows indicate the RTP streaming flows.

In operation, the architecture of **fig.5** represents a first preferred embodiment of the present invention to obtain an IMS and streaming interworking in-line with new application requirements. The embodiment is based on the combination of the services offered by the Modified RTSP proxy with the services offered by the SSEM module. From Video Player (wireless Client) and Video Server points of view, the solution doesn't require any plug-in or ad hoc modifications on the existing apparatuses. The Video Player allows the user to access other video servers either inside or outside the IMS domain. The Video Server allows the MNO to make it accessible either inside or outside the IMS domain. The modified RTSP Proxy is in charge of proxying streaming requests originated by IMS users towards any video server and of properly managing the exchange of information with the SSEM module. It recognises any request coming from the IMS subscribers and processes them accordingly, in case a request falls in the context of the invention it is processed by the SSEM module. Besides, it recognises any request originated by mobile users in the context of classical streaming applications, i.e. not IMS based applications, and process them accordingly. With that, the solution proposed by the invention is soft and guarantees the widest portability thanks to the new enabling SSEM module integrated into the IMS domain in order to "see" streaming sessions from inside IMS domain. The main goal of the Modified RTSP Proxy becomes to intercept every message (including data) concerning with streaming session, this means that it should be installed on a high performance machine able to process the great amount of data which pass through it. Therefore, the proposed solution intentionally delegates any intelligent decision to the SSEM module in the Application Server. At the interface with the SSEM module the Modified RTSP Proxy is responsible for processing each RTSP message (both requests and responses):
- if the RTSP message comes from a player or a Video Server, it must forward the message, ad-hoc modified, to the SSEM;
- If the RTSP message comes from the SSEM module, the Modified RTSP Proxy forwards it to the client (Responses) or to the server (Requests).

The SSEM module keeps memory of each Session Identifier and remembers the client-server TCP port translations.

The SSEM module is an ad hoc application running inside the IMS Application Server AS, it is responsible for monitoring relevant streaming events and for providing streaming session related information to the IMS applications running on AS. The SSEM module is responsible for monitoring the RTSP sessions originated by IMS users on the basis of instructions provided by IMS applications. In fact, IMS applications can rely on a proper Java API to interact with the module. In particular, the SSEM module enables:
- handling the association between user generated streaming sessions and related IMS applications;
- IMS domain authorization of streaming requests;
- IMS domain flexible charging of streaming sessions;
- notifications of streaming session state changes to IMS applications;
- notification of streaming content coding to IMS applications;
- design IMS and Streaming bundled applications;
- generation of a proper RTSP error response towards the user in case of denied authorization by target application

Therefore, the SSEM module needs the following information:
- identity of the end user originating streaming requests;
- name/reference of the application responsible for handling the streaming session. The two pieces of information constitutes a personalized URL included in the RTSP request messages from the client. It should be noted that RTSP specification foresees that end users are identified at IP level by retrieving the IP address and port of the TCP connection established by the player to the video server. The proposed solution foresees that end user are provided with personalized RTSP URL which contain as parameters both an application identifier AppID and the SIP URL of the end user. Therefore the RTSP URL should be formatted as follows: 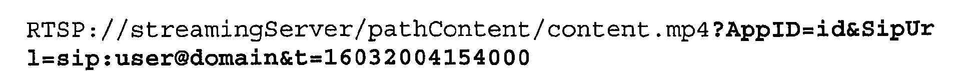 the bold string at the right of ? includes optional parameters of the RTSP message. The RTSP URL is not standard as it extends the parameter section with the following proprietary parameters:

- **AppID** is the application identifier of the specific application inside the Java RMI (Remote Method Invocation) Registry;
- **SipURL** is the SIP address of the user making the request;
- **t** is the time of URL generation: this information is used by the application for authorization.

When a streaming message arrives, the SSEM module understands which is the target application and the originating user by extracting the AppID and the SipUrl parameters from the RTSP URL. Notification from SSEM to the target application will include the SIP URL of the originating user. The solution has the following advantages:
- Applications do not need to provide the SSEM module with the user IP address and consequently SSEM do not need to maintain a database with such associations (user IP address ↔ application).
- In case the user IP address would change (e.g. battery down, out of coverage) the SSEM module need not to be updated.

Drawbacks of proposed solution:
- Need of a Web portal for the generation of personalized RTSP URLs.
- Such personalized RTSP URLs cannot be provided to other users: instead other users should be provided with an HTTP link to a Web portal able to generate personalized RTSP URLs.

Anyway, the use of personalized RTSP URL is in line with current approach to streaming services in the mobile environment. In order to enable this solution, at application initialization time the applications should provide the SSEM module with the following information:
- Application identifier, the one used in the RTSP URL and the reference interface for receiving back information from the SSEM module.
- Optionally, information about which information (e.g. SDP) and which RTSP messages or events are of interest for the application. In case this information are not provided the SSEM module assumes that the application wants to be notified of everything.

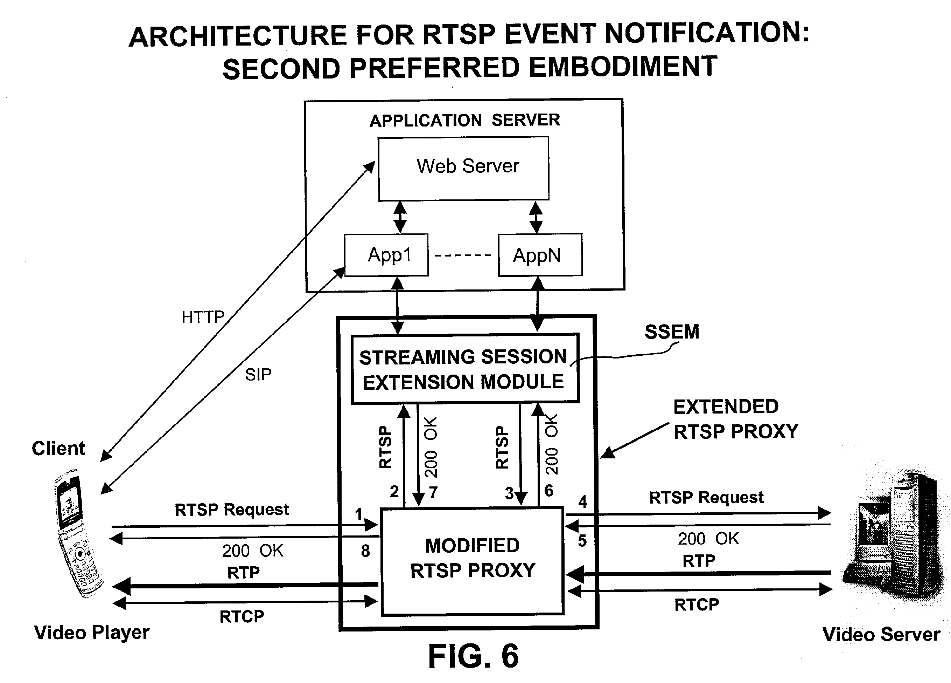

In **fig.6** a variant of the present invention is depicted which differs from the preferred embodiment of the preceding figure by the only allocation of the SSEM module inside the Extended RTSP Proxy. The main purpose of this figure is that to demonstrate the great adaptability of the SSEM module to be shifted in/out the Application Server. Independently of its allocation, the SSEM module is always conceptually part of the Extended RTSP proxy to which mainly confers the prefix "EXTENDED". In fact, the core of the SSEM module is a finite state machine instantiated reproducing the states of the RTSP protocol. In case of an increasing demand for valued streaming services the embodiments of fig.5 and 6 might run into problem of load balancing. In such a case more Modified RTSP Proxies and more SSEM modules could be equipped, assigning a SSEM module as a master which configures the other SSEM as slaves. The applications could instruct the Master directly and it could forward the instructions to the slaves, while notifications could be forwarded to the applications from the SSEM slaves directly.

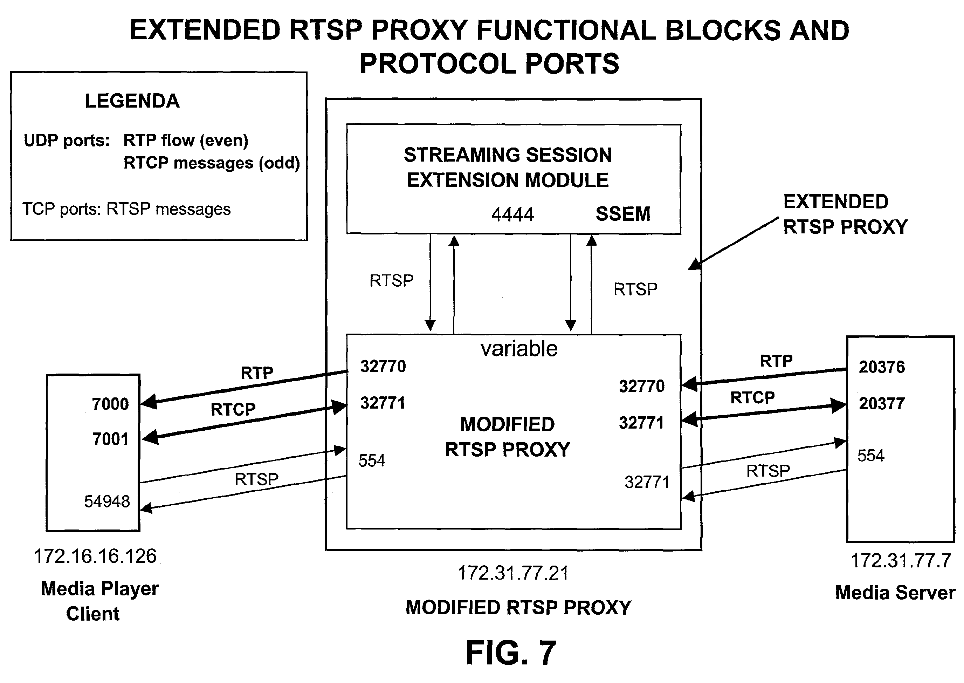

Details on RTSP protocol at the various interfaces as far as used transport protocols and the respective ports are concerned, are reported in **fig.7**. With reference to the figure: the UDP client/server ports are indicated in bold; the RTP/RTCP streaming data flows/signalling transferred at the UDP ports are represented with thick arrows; the TCP client/server ports are indicated in normal; and the RTSP messages transferred at the TCP ports are indicated with normal arrows. For the sake of simplicity a single media player and a single media server are indicated; in case of more of them, the ports 554 and 4444 remain unchanged while additional ports (differently numbered) are dynamically assigned to the new elements and indicated in the relevant RTSP messages. Also the SIP URL of the Media Player, the Modified RTSP proxy, and the Media Server are reported in the figure. The semantics is that: "the identified resource can be controlled by RTSP at the server listening for TCP connections packets on that port of host, and the Request-URI for the resource is rtsp_URL". The parameter client_port specified in the RTSP messages provides the unicast RTP/RTCP port pair on which the client has chosen to receive media data and control information. It is specified as a range, e.g.: client_port=even-even+1. The parameter server_port specified in the RTSP messages provides the unicast RTP/RTCP port pair on which the server has chosen to receive media data and control information. It is specified as in the client convention. The Modified RTSP proxy communicates with the SSEM module after establishing a TCP connection with the TCP port 4444 of the SSEM module; this means that the latter must be running and waiting for connection on TCP port 4444. Doing so, the Modified RTSP proxy opens the first TCP port locally available, this is the reason why the indication on the figure is "variable". Both Modified RTSP proxy and Media Server accept RTSP connections on the TCP port 554 traditionally reserved to RTSP. An example of how media description is requested and a play session is set up is now introduced.

### DESCRIBE flow

The DESCRIBE RTSP message out of the client video player towards the Modified RTSP Proxy should be:

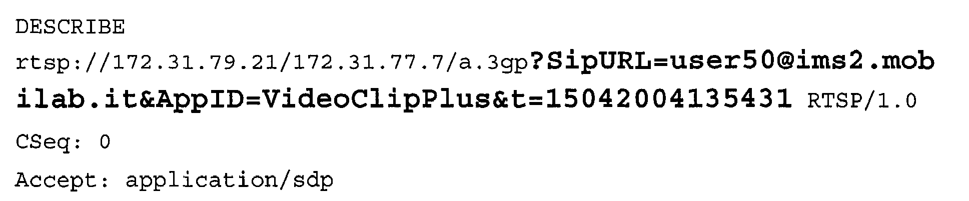

The DESCRIBE RTSP message out of the Modified RTSP Proxy towards the SSEM module should be:

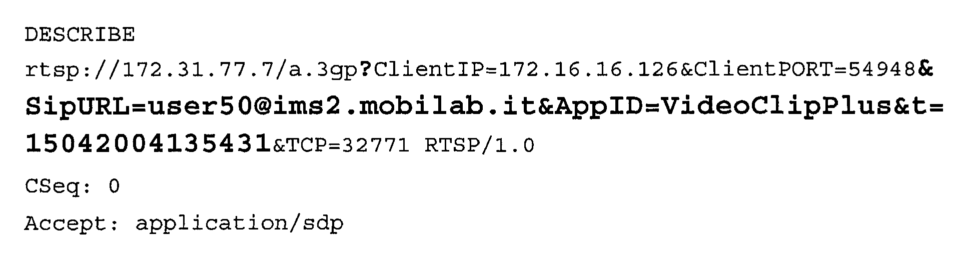

The DESCRIBE RTSP message out of the SSEM module towards the Modified RTSP Proxy should be:

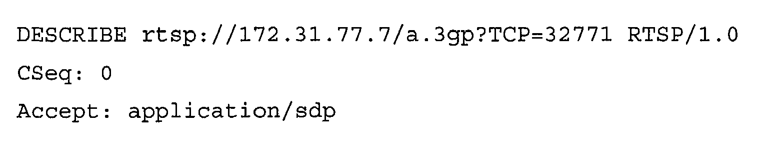

The DESCRIBE RTSP message out of the Modified RTSP Proxy towards the video server should be:

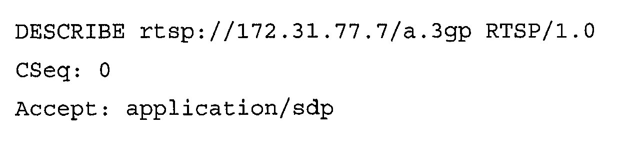

The 200 OK RTSP message out of the video server towards the Modified RTSP Proxy should be:

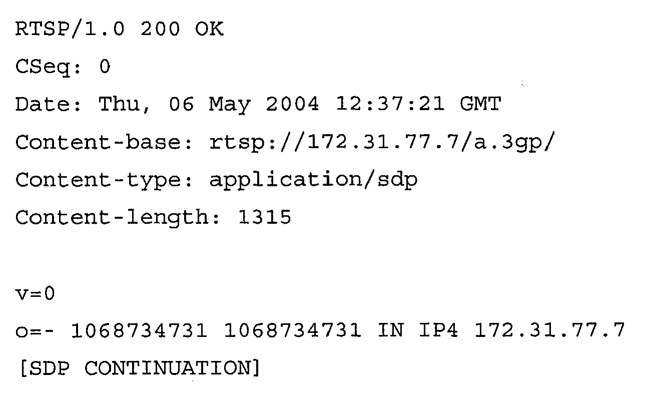

The 200 OK RTSP message out of the Modified RTSP Proxy towards the SSEM module should be:

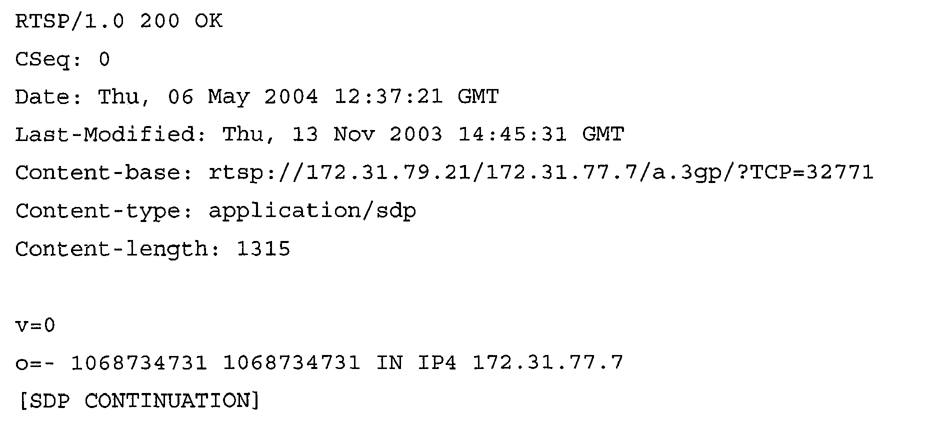

The 200 OK RTSP message out of the SSEM towards the Modified RTSP Proxy should be:

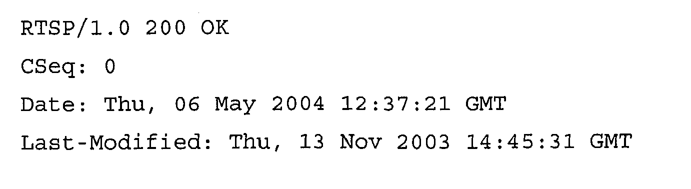

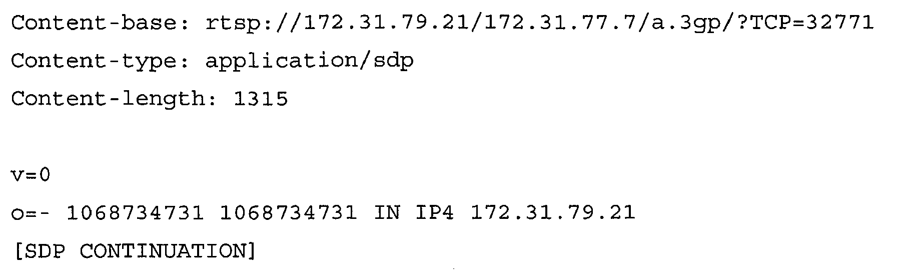

The 200 OK RTSP message out of the Modified RTSP Proxy towards the client video player should be:

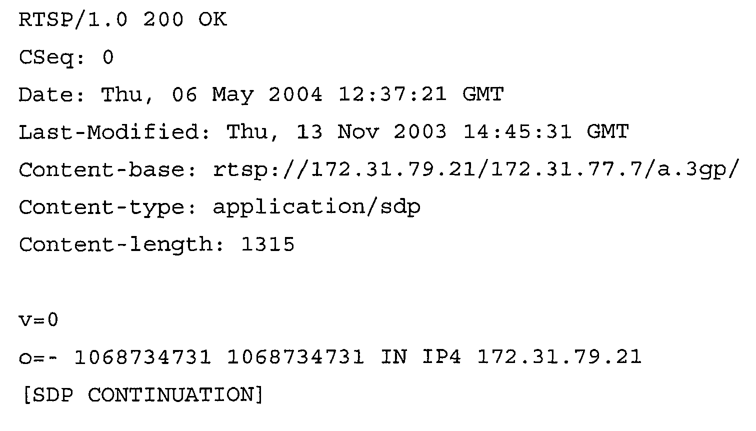

### SETUP flow

The SETUP RTSP message out of the client video player towards the Modified RTSP Proxy should be:

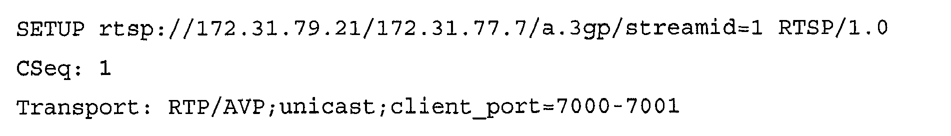

The SETUP RTSP message out of the Modified RTSP Proxy towards the SSEM module should be:

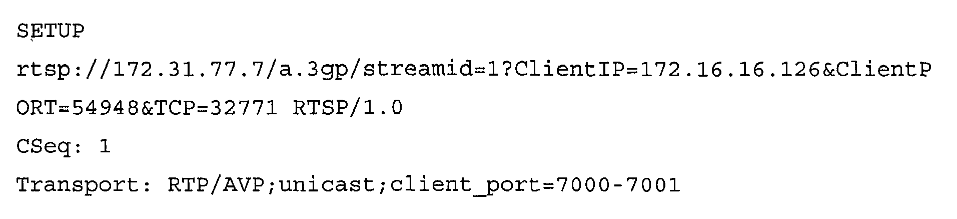

The SETUP RTSP message out of the SSEM module towards the Modified RTSP Proxy should be:

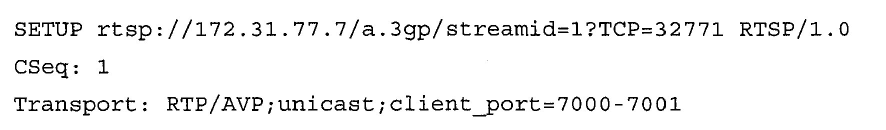

The SETUP RTSP message out of the Modified RTSP Proxy towards the video server should be:

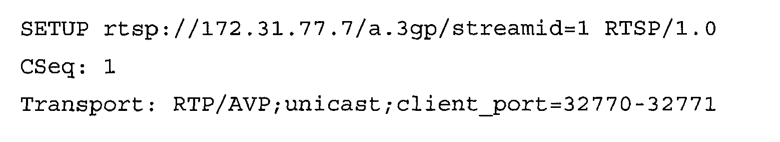

The 200 OK RTSP message from the video server to the Modified RTSP Proxy should be:

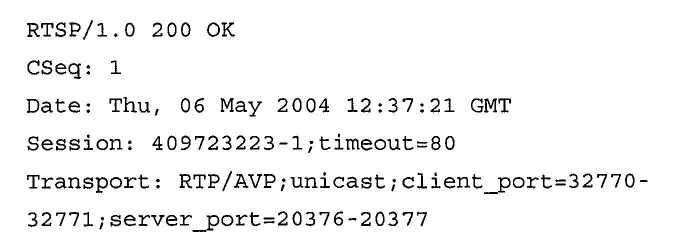

The 200 OK RTSP message from the Modified RTSP Proxy to the SSEM module should be:

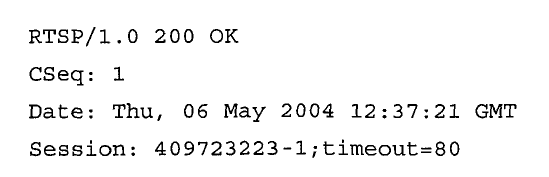

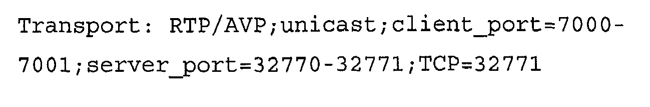

The 200 OK RTSP message from the SSEM module towards the Modified RTSP Proxy should be:

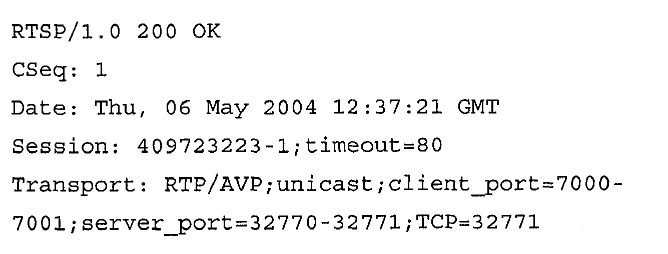

The 200 OK RTSP message from the Modified RTSP Proxy to the video player should be:

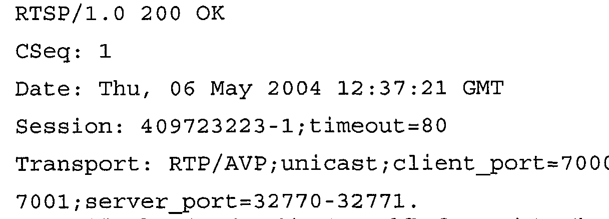

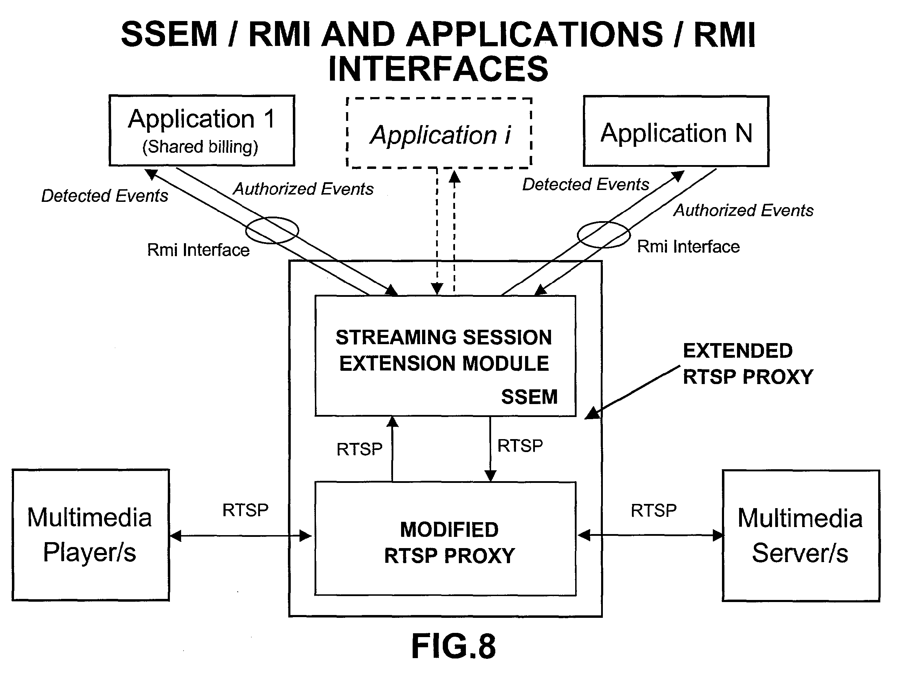

The functional architecture of fig.8 completes the preceding figure highlighting the interface between the Streaming Service Extension Module and the involved Applications inside the Application Server. The single interface will be based on Java Remote Method Invocation (RMI). The two arrows are associated with Authorized Events from the Applications 1,...., N and Detected Events to the Applications 1,...., N. Remote Method Invocation simply means one Java application (a client application) calling the method of another java application (a server application). After initial setup, the interaction between the two applications is almost transparent to the developer and the process appear to be quite simple.

The main elements of an RMI mechanism are:
- the **RMI Server,** is the RMI-server application that contains the method to be called from a remote location;
- the **RMI Client,** the client side object that remotely calls methods of the RMI server;
- the **RMI Registry** (non-SIP Load Balancer), a common mapping station that holds location and registry information about the remotely accessible RMI Server objects and methods; the RMI Server registers itself with the RMI Registry, the RMI Client then queries the RMI Registry for information about how to remotely invoke the RMI method. The RMI Registry is included in the Application Server.

The Streaming Session Module will act as:
- an RMI Server for an Application in order to obtain the application identifier and the list of the desired streaming event notifications;
- an RMI Client of an Application in order to communicate the required streaming event notifications.

An Application will act as:
- an RMI Client of the SSEM module in order to communicate its existence and the desired streaming event notifications;
- an RMI Server for the SSEM module in order to receive the required streaming event notifications.

Before passing to a detailed description of the SSEM module, it is helpful to describe the RTSP message sequence chart of a method, e.g. PLAY, typical of the streaming service.

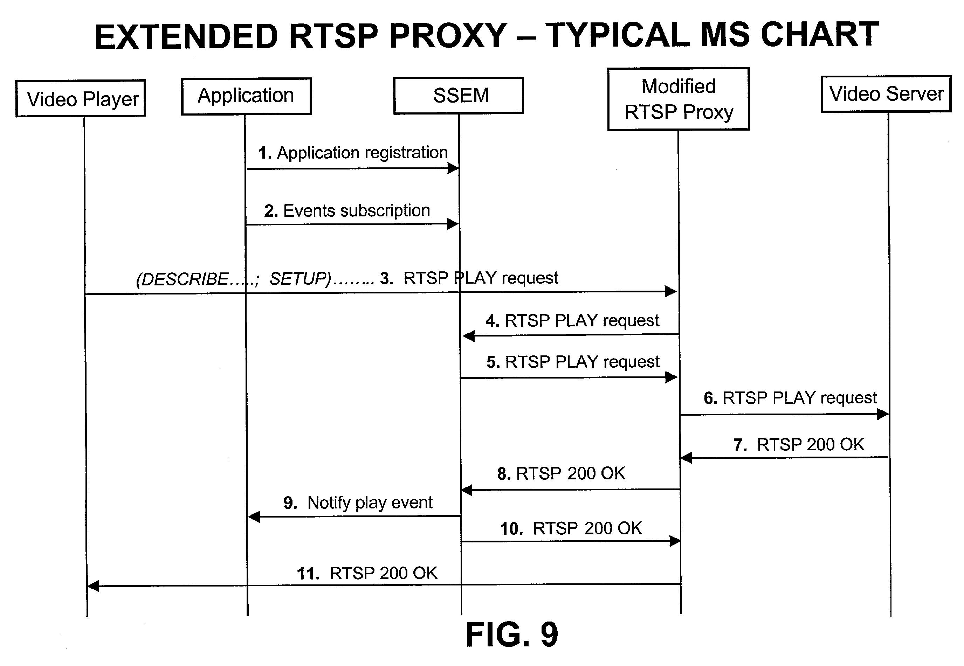

With reference to **fig.9**, all the network elements involved in the session are indicated on top of the figure and the exchanged messages are numbered sequentially. The sequence is discussed below:
1. the specific application requesting the services of the SSEM module registers itself with it via the RMI interface;
2. then the same application asks the SSEM module, via the RMI interface, to notify back some or all the events that can happen during a streaming session of a particular subscriber (e.g. PLAY, PAUSE, STOP, FAST FORWARD and so on...);
3. when a subscriber executes a command, let's say a RTSP PLAY request, the video player forwards the command to the TCP port 554 of the Modified RTSP Proxy;
4. the RTSP PLAY request is transferred to the TCP port "variable" of the Modified RTSP Proxy to be redirected to the TCP port 4444 of the SSEM module, according to the RTSP port translation;
5. the RTSP PLAY request is used by the SSEM module and redirected to the TCP port "variable" of the Modified RTSP Proxy and then to the TCP port 32771, according to the RTSP port translation.
6. the RTSP PLAY request is transferred to the TCP port 554 of the Video Server.
7. the RTSP 200 OK response from the Video Server is transferred to the TCP port 32771 of the Modified RTSP Proxy and then to the TCP port "variable";
8. the RTSP 200 OK response is redirected to the TCP port 4444 of the SSEM module;
9. the SSEM module sends a NOTIFY PLAY EVENT message, via the RMI interface to inform the invoked application that that particular event happened; the application will use this notification for its internal scopes
10. the RTSP 200 OK response is also redirected to the TCP port "variable of the Modified RTSP Proxy and then to the TCP port 554;
11. the Modified RTSP Proxy forwards the last RTSP 200 OK response to the TCP port 54948 of the video player.

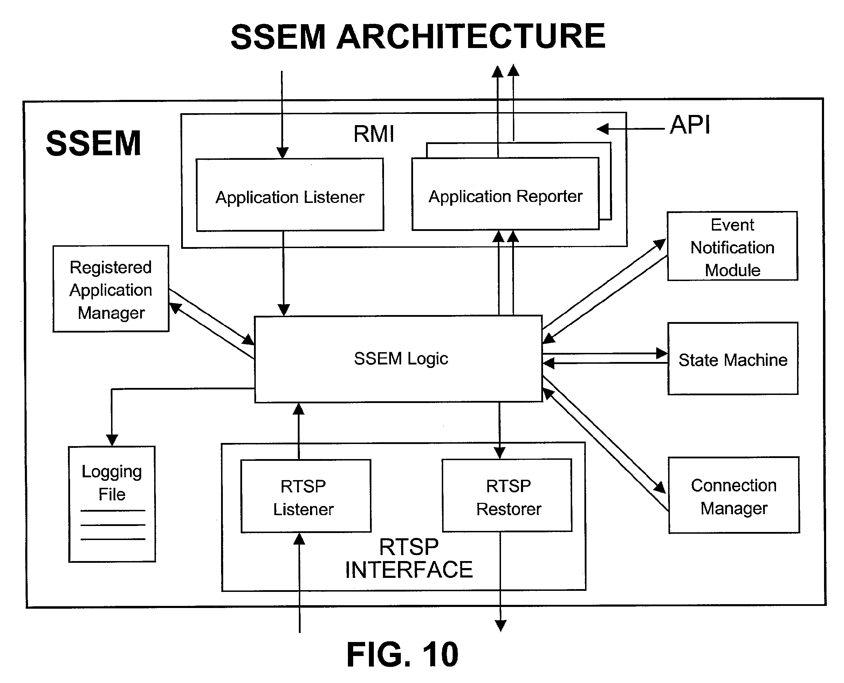

With reference to **fig.10,** the Streaming Service Extension Module includes the following functional blocks: RTSP Listener, Application Listener, SSEM Logic, Connection Manager, Registered Application Manager, RTSP Interface, State Machine, Event Notification Module, Application Interface, Logging File. The input of the RTSP Listener block corresponds to the port 4444 for incoming messages from the Modified RTSP Proxy (fig.8), while the output is connected to the SSEM Logic. The input of the RTSP Interface block is connected to the SSEM Logic while the output corresponds to the port 4444 for outgoing messages to the Modified RTSP Proxy. The input of the Application Listener block is interfaced with the Application 1, .., N (fig.8) while the output is connected to the SSEM Logic. The input of the Application Interface block/s is/are connected to the SSEM Logic while the output/s is/are interfaced with the Application 1, .., N. The Logging File receives information from the SSEM Logic. The remaining blocks are connected two-way with the SSEM Logic. The interfaces of Streaming Service Module towards Modified RTSP Proxy and towards Applications are based on two kinds of protocols: Java RMI interface inside the Ubiquity Application server and and RTSP. All functional blocks constituting the SSEM module are processes running on a host computer between the input/output ports addressed by the RTSP protocol and the Java RMI interfaces. Without limitation, either Java program language or C++ may be used to obtain said processes. Follows a functional description of the SSEM's internal components elements/processes:

The **RTSP Listener** is an interfacing element responsible of the receiving first RTSP messages from the Modified RTSP Proxy over a TCP connection, creating a RTSP_Message object, and passing its reference to the SSEM Logic.

The **RTSP Interface** is an interfacing element responsible of the sending of second RTSP Messages obtained from the first one to the Modified RTSP Proxy over the TCP connection.

The **Connection Manager** maintains the association between the client's IP address (SIP URL) and the number of the TCP port used by the Modified RTSP Proxy to contact the Video Server for that session (e.g.: 172.16.16.126- 54948; 32771). The SSEM Logic uses it:
- to memorize in the Connection Manager a new association;
- to remove an association when a TEARDOWN message is processed and the session is closed;
- to get a TCP port number to insert a correct source field for the Transport header in the messages that the proxy will forward to the Video Server;
- to get the parameters to create a destination field in the messages directed to the clients.

The **State Machine:** a state machine is instantiated for a streaming session relevant to each couple addressed by SIP URL and AppID parameters. A couple is preferably (but not mandatory) embedded in a client RTSP message (DESCRIBE, SETUP). The SSEM Logic uses a State Machine to detect any session state change. A more detailed description of this block is given successively.

The **Registered Application Manager** is responsible of the registered applications. It is used by the SSEM Logic to get a reference to the "Application Interface" corresponding to the AppID identifier. Applications which request to be registered are a subset inside the Application Server having in charge the new valued streaming services, such as the ones mentioned in the introduction.

The **Event Notification Module** maintains track of the requested event notifications made by the Applications. The SSEM Logic uses it:
- to memorize the request of the Application identified by AppID to be notified when the clients go through some *EventType: "event RTSP session state change";*
- to know whether it has to notify an event or not to the Application AppID.

The **Application Listener** implements the SSEM RMI interface between the Applications and the SSEM module. This RMI Interface is used by an Application to:
- communicate its existence to the SSEM;
- communicate to the SSEM the streaming events in which it is interested.

The corresponding Java code is: 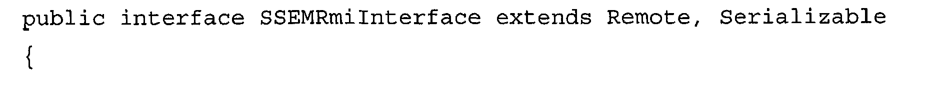 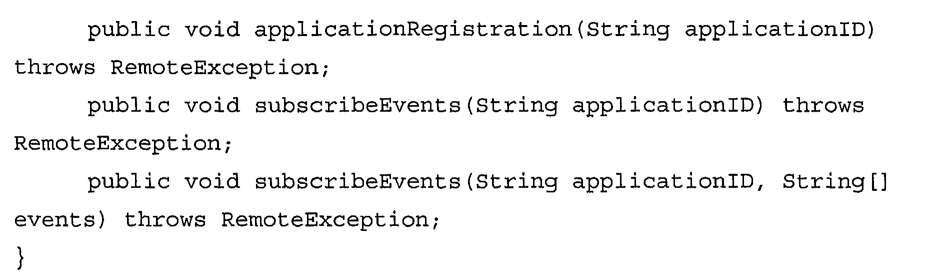 By the first method, the application communicates its existence to the SSEM module; then the application can subscribe to all the streaming events by the second method or to a choice of them by the third one. We suppose that the list of monitored streaming events it's the same for all the users.

The **Application Interface** is an object responsible of the call of the RMI methods (Java) implemented by registered applications. Every application register its methods in the RMI Registry with a composed name. The Application Interface is a RMI interface used by SSEM module to:
- notify the requested streaming event;
- authorize a requesting user.
The corresponding Java code is: 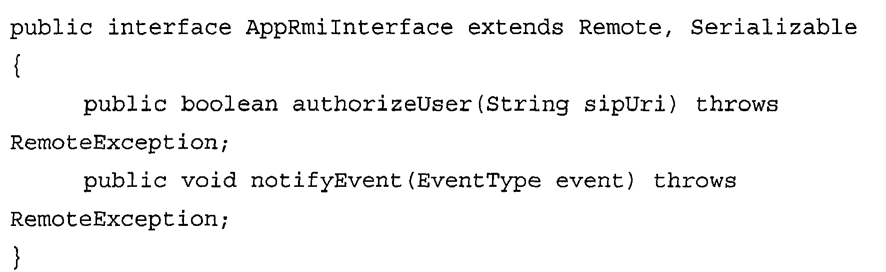 By the first method the SSEM module asks a registered Application to authorize the streaming user (player).
By the second method the SSEM module notifies the requested streaming event to a registered application; the EventType object could enclose all relevant pieces-of-information information for the particular event e.g.:
- the application identifier;
- the SIP URI of the user;
- the IP address of the user;
- the message SDP body;
- the related RTSP request and response;
- the content URL;
- the parameters added to the content URL;
- temporal information for charging purposes;
- the session id.
The notified events received back by the registered Applications are used just to perform the valued streaming services they have been invoked for, in strict cooperation with protocols managed by the Application Server, e.g.: the Authentication, Authorization and Accounting (AAA) aiming Diameter at the Gq interface, or SIP protocol at the Sc interface.

The **SSEM Logic** is the control function of the SSEM module. It is able to parse RTSP messages to implement their instructions in order to take right decisions. The complex operation of the SSEM Logic is illustrated by the description of an exemplary proxy session.
1. At the completion of all the initial setting the *SSEM Logic* receives an RTSP DESCRIBE request from the Modified RTSP Proxy at the *RTSP Listener*;
2. the *SSEM Logic* communicates the "DESCRIBE" string along with other parameters to the State *Machine;*
3. the *SSEM Logic* is aware that a DESCRIBE is the first method of a streaming session and communicates with the *Connection Manager* passing the parameters found in the received RTSP URL in order to create a new connection touple;
4. the SSEM *Logic* modifies the parameters of the RTSP message according to the RTSP protocol rules at the interface between the Modified RTSP Proxy and the SSEM module and sends it to the *RTSP Interface;*
5. after some time at the *RTSP Listener* the *SSEM Logic* receives an RTSP 200 OK response containing the SDP of the media requested;
6. the *SSEM Logic* communicates this event to the *State Machine;*
7. the *SSEM Logic* knows from the State *Machine* that a new state has been created; an Application could be in fact interested in the event of a DESCRIBE from the client.
8. as there is a new state, the SSEM *Logic* retrieves from the *State Machine* the current state and the application involved;
9. the SSEM *Logic* asks the *Event Notification Module* if the application is interested in this event and depending on the result it contacts the *Registered Application Manager* or not. Let us assume that the result is false;
10. the *SSEM Logic* retrieves from the *Connection Manager* the IP address and port of the client and creates a message for the *RTSP Interface;*
11. the next RTSP message is a SETUP. As the *SSEM Logic* receives the new message from the *RTSP Listener* it contacts the *State Machine;*
12. the *SSEM Logic* then retrieves from the *Connection Manager* the TCP port for RTSP and creates the message for the *RTSP Interface;*
13. let us assume that the Video Server responds with an RTSP 200 OK and that the Modified RTSP Proxy forwards this information to the *RTSP Listener;*
14. the *SSEM Logic* communicates this event to the *State Machine;*
15. as there is a new state, the *SSEM Logic* retrieves the current state and the involved Application (AppID) from the *State Machine;*
16. the *SSEM Logic* asks the *Event Notification Module* if the Application is interested in this event and depending on the result it contacts the *Registered Application Manager* or not. Let us assume that the result is **true;**
17. the *SSEM Logic* retrieves the application reference from the *Registered Application Manager,*
18. then the *SSEM Logic* notify the event to the Application using the *Application Interface;*
19. a similar procedure continues for all the messages of the session. When a TEARDOWN response is received and the session is consequently terminated, the session and the connections are destroyed from the *State Machine* and the *Connection Manager* before sending back the last response of the session to the Modified RTSP Proxy;
20. a logging file is written by the *SSEM Logic* to monitor the behaviour of the SSEM module.

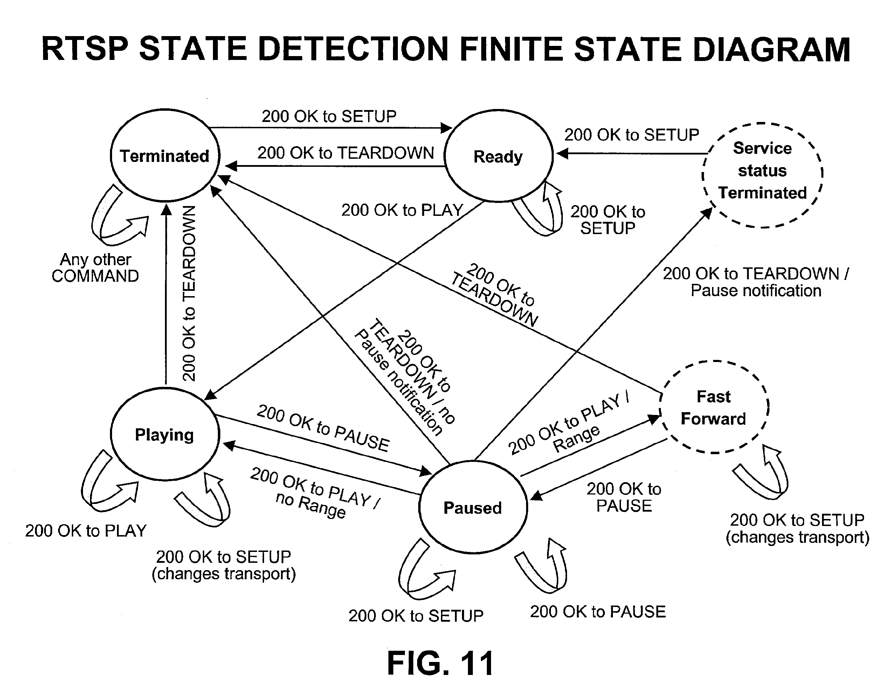

In **fig.11** a finite state diagram of a **State Machine** instance is reported in synoptical form. With reference to **fig.11,** a circle indicates a corresponding state of a streaming session assigned to a client (the player UE/SM) for a given invoked Application. The following states are considered: Terminated, Ready, Paused, and Playing; plus two meta-states: Fast Forward, and Service status Terminated (indicated with dashed line). Change state is contemporary to the reception of a 200 OK RTSP message from the Video Server as a response to the preceding RTSP Request message indicated on the arrow together with the 200 OK. When the state changes a significant event is thrown. The event is a mean to communicate the actual state of a client to an invoked Application. A word must be spent on the Fast Forward meta-state. This is not a true state of the streaming session, but a service state, introduced in the State Machine to avoid false notifications. As for RTSP specification, a fast forward mechanism is implemented issuing first a PAUSE request and, immediately after, a PLAY request with a *Range* field. If we base the event notification on the request method only, this would lead to misunderstandings and the application would be notified of Paused and Playing states also during the repositioning of the stream. Because this is an unwanted feature, the proposed solution bases its decisions also on the presence of a *Range* field in the header of the RTSP request message. The PAUSE notification will be therefore sent after some amount of time (700 ms - 1 s depending on the Network) in order to be sure that the PAUSE received is not a misunderstood one (there is no PLAY immediately after). If an Application intends to open a web browser page after a pause event is notified, the State Machine had to be extended via a new service status. In fact, if during a pause a new web page is opened, the streaming player of some handset (e.g.: the A925® Motorola) closes and a TEARDOWN is sent to the Modified RTSP Proxy. As the Application is not interested in this notification, the SSEM module checks if the Application subscribed the *Paused* status notification and, upon the receipt of a TEARDOWN, switches the state in *Terminated* or *Service status Terminated.* No application can subscribe itself to this service status.

While a particular embodiment of the present invention has been shown and described, it should be understood that the present invention is not limited thereto, since other embodiments may be made by those skilled in the art without departing from the spirit and scope thereof.

One of this other embodiment is the one having the Extended RTSP Proxy colocated with the Media Server, i.e. they could be reached at the same IP address. In this case, the Media Server should be contacted by the Extended RTSP proxy on a TCP port different from the default one (i.e. different from 554).

### USED ACRONYMS

3GPP - 3^{rd} Generation Partnership Program
API - Application Programming Interface
AS - Application Server
AVP - Audio Video Profile
BGCF - Breakout Gateway Control Function
CDR - Charging Data Record
COPS - Common Open Policy Service protocol CPU - Central Processing Unit
CSCF - Call State Control Function
DNS - Domain Name Server
GGSN - Gateway GPRS Support Node
HSS - Home Subscriber Server
HTTP - HyperText Transport Protocol
IETF - Internet Engineering Task Force
IMS - IP Multimedia core network Subsystem
MNO - Mobile Network Operator
MMS - Multimedia Messaging Service
MS - Mobile Station
MSISDN - Mobile Subscriber ISDN Number
NE - Network Element
PCF - Policy Control Function
PLMN - Public Land Mobile Network
PSTN - Public Switched Telephone Network
QoS - Quality of Service
RFC - Request for Comments
RNC - Radio Network Controller
RTCP - Real-time Transport Control Protocol
RTP - Real-time Transport Protocol
RTSP - Real-Time Streaming Protocol
SDP - Session Description Protocol
SGSN - Serving GPRS Support Node
SIP - Session Initiation Protocol
SLA - Service Level Agreements
SR - Sender Report
SSRC - Synchronization Source
TCP - Transport Control Protocol
TS - Technical Specification
UDP - User Datagram Protocol
UE - User Equipment
URI - Uniform Resources Identifier
URL - Uniform Resources Locator

### REFERENCES

- [3GPP_GPRS]: 3GPP TS 23.060 V 4.4.0, "General Packet Radio Service (GPRS); Service Description; Stage 2", (March 2002).
- [3GPP_IMS]: 3GPP TS 23.228 V 6.5.0, "IP Multimedia Subsystem (IMS), Release 6", (March 2004).
- [3GPP_NetArch]: 3GPP TS 23.002 V 6.1.0 , "Network Architecture, Release 5", (June 2003).
- [3GPP_ServReq]: 3GPP TS 22.228 V 6.5.0, "Service requirements for the Internet Protocol (IP) multimedia core network subsystem"; Stage 1, Release 6", (January 2004).
- [3GPP_E2EQoS]: 3GPP TS 23.207 V 6.2.0, "End-to-end Quality of Service (QoS) concept and architecture, (Release 6)", (March 2004).
- [RFC3261]: IETF RFC 3261 "Sip Initiator Protocol", June 2002.
- [RFC2748]: IETF RFC 2748, "The COPS (Common Open Policy Service) Protocol", D. Durham, J. Boyle, R. Cohen, S. Herzog, R. Rajan, A. Sastry, January 2000
- [RFC2326]: IETF RFC 2326, "Real Time Streaming Protocol (RTSP)", Schulzrinne H., Rao A. and Lanphier R., 1998.
- [RFC3550]: IETF RFC 3550, "RTP: A Transport Protocol for Real-Time Applications", H. Schulzrinne, S. Casner, R. Frederick, V. Jacobson, July 2003.
- [RFC2327]: IETF RFC 2327, "SDP: Session Description protocol", Handley M. , Jacobson V., 1998.
- [RFC0793]: IETF RFC 0793 or STD 0007, "Transmission Control Protocol", J. Postel, Sept. 01 1981
- [RFC0768]: IETF RFC 0768 or STD 0006, "User Datagram Protocol", J. Postel, Aug. 28 1980
- [RFC3588]: IETF RFC 3588, "Diameter Base Protocol", P. Calhoun, J. Loughney, E. Guttman, G. Zorn, J. Arkko, September 2003

## Claims

1. Extended RTSP proxy to control media stream delivering via IP connections from at least a media server to end subscribers of a communication network with an agreed end-to-end quality of service, the extended proxy acting as intermediary between RTSP requests issued by the subscribers in the role of clients *(UE*/*MS)* playing the media streaming and the responses from at least a media server *(Video Server),* **characterized in that** is comprised of at least:
- an RTSP proxy *(Modified RTSP proxy)* arranged for redirecting towards at least an extension module, named hereinafter SSEM module *(SSEM),* the requests issued by the client *(UE*/*MS)* and the respective responses issued by the media server *(Video Server)* and restoring said requests and responses from the SSEM module *(RTSP Restorer)* forwarding them to their original destinations *(UE*/*MS, Video Server);*
- multiple instances of a finite state machine *(State Machine)* inside the SSEM module for detecting any streaming event type session state change *(Terminated, Ready, Playing, Paused, Fast Forward, Service status Terminated)* from said redirected requests and responses, being each instance addressed by a couple constituted by the identifier of a subscriber in the role of client (*UE*/*MS*) and the application identifier of an application *(Application 1,...., N)* invoked by that client *(UE*/*MS);*
- application program interfacing means *(API, RMI, Application Listener, Application Reporter)* inside the SSEM module for receiving from the applications *(Application 1,* ...., *N)* their references as being interested in the notification of streaming events, and for reporting back to the interested applications either all or a subset of streaming events at every session state change.

2. The Extended RTSP proxy of the preceding claim, **characterized in that** said SSEM module (SSEM) further includes application registering means *(Registered Application Manager)* for registering the application identifier of each application *(Application 1, ...., N)* requesting the services of the SSEM module and receiving from the registered applications respective lists of desired streaming event notifications;

3. The Extended RTSP proxy of any preceding claim, **characterized in that** said SSEM module (SSEM) further includes connection management means *(Connection Manager)* for maintaining the association between the client's IP address and TCP port with the TCP port number used by the RTSP Proxy *(Modified RTSP proxy)* to contact the Video Server for a streaming session.

4. The Extended RTSP proxy of the preceding claim when it depends on claim 2, **characterized in that** said SSEM module (SSEM) further includes notification means *(Event Notification Module)* having room for storing the application identifiers of said registered applications *(Application 1,...., N)* together with their lists of desired streaming events, and comparison means for selecting each detected streaming event matching a corresponding one in a respective list to be forwarded to said application program interfacing means *(API, RMI, Application Reporter).*

5. The Extended RTSP proxy of any preceding claim, **characterized in that** each said couple of identifiers belongs to a personalized RTSP URL included in the header of the DESCRIBE and/or SETUP request message issued by the client *(UElMS).*

6. The Extended RTSP proxy of any preceding claim, **characterized in that** said application program interfacing means *(API, RMI, Application Listener, Application Reporter)* rely on Java Remote Method Invocation (RMI).

7. The Extended RTSP proxy of any preceding claim, **characterized in that** said RTSP proxy *(Modified RTSP proxy)* includes additional TCP ports (variable) connected to RTSP Interfaces *(RTSP INTERFACE)* inside said SSEM module *(SSEM)* for transporting said RTSP requests and responses redirected towards the SSEM module *(SSEM)* and restoring them back to the RTSP proxy *(Modified RTSP proxy).*

8. The Extended RTSP proxy of any preceding claim, **characterized in that** said communication network is a packet switched PLMN and said applications are provided by a standardized IMS subsystem integrated into the PLMN's core network to offer IP services, methods, and applications inside the PLMN.

9. The Extended RTSP proxy of the preceding claim, **characterized in that** said SSEM module *(SSEM)* avails of the processing means of an Application Server inside the IMS core.

10. RTSP DESCRIBE request message to be used by the Extended RTSP Proxy of the claim 1, **characterized in that** includes a personalized URL comprising the identifier of a subscriber in the role of client *(UE*/*MS)* and the identifier of an application *(Application 1,.... , N)* invoked by that client.

11. RTSP SETUP request message to be used by the Extended RTSP Proxy of the claim 1, **characterized in that** includes a personalized URL comprising the identifier of a subscriber in the role of client *(UE*/*MS)* and the application identifier of an application *(Application 1, .... , N)* invoked by that client.

12. The RTSP request message of claim 10 or 11, **characterized in that**:
• said communication network is a packet switched PLMN;
• said application is provided by a standardized IMS subsystem;
• said subscriber identifier is the SIP address of the relative client.

13. Method of interworking via IP connections between a RTSP proxy and streaming applications running inside an Application Server, the RTSP proxy acting as intermediary between at least a media server *(Video Server)* and the subscribers *(UElMS)* of a communication network in the role of clients playing the media with an agreed end-to-end quality of service, **characterized in that** is carried out by the following concurrent processes:
- a RSTP Listener *(RTSP Listener)* for capturing from the RTSP proxy *(Modified RTSP proxy)* the passing requests issued by a client (*UE*/*MS*) and the respective passing responses issued by said media server *(Video Server)*
- multiple instances of a process simulating a finite state *(State Machine)* for detecting any event type session state change from said passing requests and responses, each instance being addressed by a couple constituted by the identifier of a subscriber in the role of client *(UE*/*MS)* and the identifier of an application *(Application 1,...., N)* invoked by that client;
- application program interface *(API, RMI, Application Listener, Application Reporter)* for receiving from the applications *(Application 1,* ...., *N)* their references as being interested in the notification of streaming events, and for reporting back to the interested applications either all or a subset of streaming events at every session state change.

14. The method of the preceding claim, **characterized in that** further includes an application registering process *(Registered Application Manager)* for registering the application identifier of each application *(Application 1,...., N)* requesting streaming services and receiving the respective list of the desired streaming event notifications;

15. The method of claim 13 or 14, **characterized in that** further includes a connection management process *(Connection Manager)* for maintaining the association between the client's IP address and TCP port with the TCP port number used by the RTSP Proxy *(Modified RTSP proxy)* to contact the Video Server during a streaming session.

16. The method of the preceding claim when it depends on claim 14, **characterized in that** further includes a notification process *(Event Notification Module)* which:
- stores the application identifiers of said registered applications (Application 1,...., N) together with their lists of desired streaming events;
- selects each streaming event matching a corresponding one inside a respective list;
- forwards the selected events to said application program interface(API, RMI, Application Reporter).

17. The method of any claim from claim 13, **characterized in that** each said couple of identifiers belongs to a personalized RTSP URL included in the header of the DESCRIBE and/or SETUP request message issued by the client *(UE*/*MS).*

18. The method of any claim from claim 13, **characterized in that** said application program interface *(API, RMI, Application Listener, Application Reporter)* rely on Java Remote Method Invocation (RMI).

19. The method of any claim from claim 13, **characterized in that** includes a RTSP Restoring process *(RTSP Restorer)* for restoring said captured RTSP requests and responses back to the RTSP proxy *(Modified RTSP proxy)* to be forwarded to their original destinations *(UE*/*MS, Video Server).*

20. The method of any claim from claim 13, **characterized in that** said communication network is a packet switched PLMN and said applications running inside the Application Server are provided by a standardized IMS subsystem integrated into the PLMN's core network to offer IP based services, methods, and applications inside the PLMN.

21. The method of the preceding claim, **characterized in that** said Application Server belongs to the IMS core.
